# EUROPEAN PATENT APPLICATION

(11) **EP 2 557 826 A1**
(43) Date of publication of application: **13.02.2013**
(21) Application number: 10849318.0
(22) Date of filing: 24.12.2010
(51) Int. Cl.: H04W 8/18, H04W 12/06

(54) **SERVICE MANAGEMENT SYSTEM AND METHOD**

(30) Priority: 06.04.2010 CN 201010145182
(71) Applicant: ZTE Corporation, Shenzhen, Guangdong 518057 (CN)
(72) Inventor: GAO, Shuibo, Guangdong 518057 (CN); YAN, Pengxiang, Guangdong 518057 (CN); HUA, Guodong, Guangdong 518057 (CN)
(74) Representative: Quinterno, Giuseppe
(86) International application number: PCT/CN2010/080271
(87) International publication number: WO 2011/124082

(57) **Abstract**

The present disclosure discloses a service management system and method, wherein the service management system comprises: a formulation module (10) configured to formulate a service operation policy for a value-added service of a Service Provider (SP), wherein the service operation policy determines the service attributes of the value-added service by multiple preset decision attributes included in the service operation policy; a verification module (20) configured to verify whether the service attributes of the value-added service satisfy the service operation requirements by using the service operation policy formulated by the formulation module (10) when the SP sends the value-added service, and allow sending the value-added service to the user in the situation that the requirements are satisfied. The present disclosure enables precise management for the services operated by SPs, thus reducing strong impact and loss to an operating system caused by the service operation, improving the operation efficiency of the service system, and avoiding annoying the users outside the service operation policy.

## Description

### Field of the Invention

The present disclosure relates to the field of communication, and in particular to a service management system and method.

### Background of the Invention

A Service Provider (SP) is a provider of value-added telecom services. The SP provides services for users via a value-adding interface provided by an operator. And, the SP charges fees by the way that the operator deducts relevant service fees from the mobile phone fees or broadband fees etc. of the user. With the flourishing development of the value-added telecom services, the number of SPs is increasing, and they provide a variety of services.

Users are enjoying various value-added telecom services provided by an increasing number of SPs, and these services bring huge profits for operators.

However, in the prior art, when the operators support the value-added services of the SPs, all value-added services are supported illimitably. Thus, it can cause strong impact and loss to the operating systems of the operators, and the operation efficiencies of the service systems are influenced.

### Summary of the Invention

The main purpose of the present disclosure is to provide a service management system and method to at least solve the problem above.

According to one aspect of the present disclosure, a service management system is provided, comprising: a formulation module, configured to formulate a service operation policy for a value-added service of a Service Provider (SP), wherein the service operation policy determines the service attributes of the value-added service by multiple preset decision attributes included in the service operation policy; and a verification module, configured to, when the SP sends the value-added service, verify whether the service attributes of the value-added service satisfy service operation requirements by using the service operation policy formulated by the formulation module, and to allow sending the value-added service to a user in the situation that the requirements are satisfied.

Preferably, the service management system further comprises: a management module, configured to set the decision attributes according to an instruction received from an operator, and to establish a mapping relationship between the decision attributes and the service attributes; a receiving module, configured to receive from the SP a request for formulating the service operation policy for the value-added service; and the formulation module, further configured to use the mapping relationship to formulate the service operation policy according to requirement information in the request; wherein the decision attributes comprise at least one of: a user group attribute, a region attribute and a service domain attribute.

Preferably, the management module is further configured to set new decision attributes and/or formulate a new service operation policy according to the instruction received from the operator, or to delete/modify the set decision attributes and/or the formulated service operation policy according to the instruction; and further configured to modify the service operation policy according to the instruction received from the SP.

Preferably, the verification module is further configured to, when it is verified that the value-added service does not satisfy the requirements, send an error message to the SP and prohibit sending the value-added service to the user.

Preferably, the service operation policy is a default service operation policy formulated according to the instruction received from the operator.

According to another aspect of the present disclosure, a service management method is provided, comprising: formulating a service operation policy for a value-added service of an SP, wherein the service operation policy determines the service attributes of the value-added service by multiple preset decision attributes included in the service operation policy; verifying whether the service attributes of the value-added service satisfy service operation requirements by using the service operation policy formulated by the formulation module, when the SP sends the value-added service; and permitting to send the value-added service to the user in the situation that the requirements are satisfied.

Preferably, before formulating a service operation policy for a value-added service of an SP, the method further comprises: receiving from an SP a request for formulating a service operation policy for a value-added service; and formulating the service operation policy for the value-added service of the SP comprises: formulating the service operation policy according to the requirement information in the request.

Preferably, before receiving the request, the method further comprises: setting the decision attributes according to an instruction received from an operator, and establishing a mapping relationship between the decision attributes and the service attributes; and formulating a service operation policy according to the requirement information in the request comprises: using the mapping relationship to formulate the service operation policy according to the requirement information, wherein the decision attributes comprise at least one of: a user group attribute, a region attribute and a service domain attribute.

Preferably, the service management method further comprises: set new decision attributes and/or formulate a new service operation policy according to the instruction received from the operator, or delete/modify the set decision attributes and/or the formulated service operation policy according to the instruction.

Preferably, the service management method further comprises: modify the service operation policy according to the instruction received from the SP.

Preferably, after verifying whether the service attributes of the value-added service satisfy the service operation requirements by using the service operation policy, the method further comprises: in the situation that the value-added service does not satisfy the requirements, sending an error message to the SP and prohibit sending the value-added service to the user.

Through the present disclosure, a value-added service operated by an SP is regulated by formulating a service operation policy for the service operated by the SP, thus solving the problem in the related art that supporting all value-added services without limitation causes strong impact and loss to the operating system of the operator, and negatively influences the operation efficiency of the service system. In this way, multiple decision attributes, which can be dynamically set, included in the service operation policy can prohibit services which fail to satisfy the service operation policy from being sent to users, so that the value-added service operated by the SP is provided to the corresponding user under the corresponding service operation policy. Therefore, precise management for the services operated by SPs is realized to reduce strong impact and loss to the operating system caused by the service operation. The operation efficiency of the service system is improved. And the solution can avoid annoying the users outside the service operation policy.

### Brief Description of the Drawings

The drawings herein illustrated are intended to provide further understanding of the present disclosure and constitute a part of the present application. The exemplary embodiments of the present disclosure and the illustrations thereof are used for explaining the present disclosure, but not for imposing an improper limitation to the present disclosure. In the drawings:
Fig. 1 is a structural diagram illustrating a service management system according to an embodiment of the present disclosure;
Fig. 2 is a schematic diagram illustrating a service management system according to a preferred embodiment of the present disclosure;
Fig. 3 is a flowchart illustrating a service management method according to an embodiment of the present disclosure;
Fig. 4 is a schematic diagram illustrating formulation and alteration of a service operation policy according to a preferred embodiment of the present disclosure;
Fig. 5 is a schematic diagram illustrating the decision attributes according to an embodiment of the present disclosure; and
Fig. 6 is a flowchart illustrating sending of a value-added service by an SP according to a preferred embodiment of the present disclosure.

### Detailed Description of the Embodiments

The present disclosure will be described in detail below with reference to the drawings and in combination with the embodiments. It should be noted that, if there is no conflict, the embodiments of the present application and the features in the embodiments can be combined with each other.

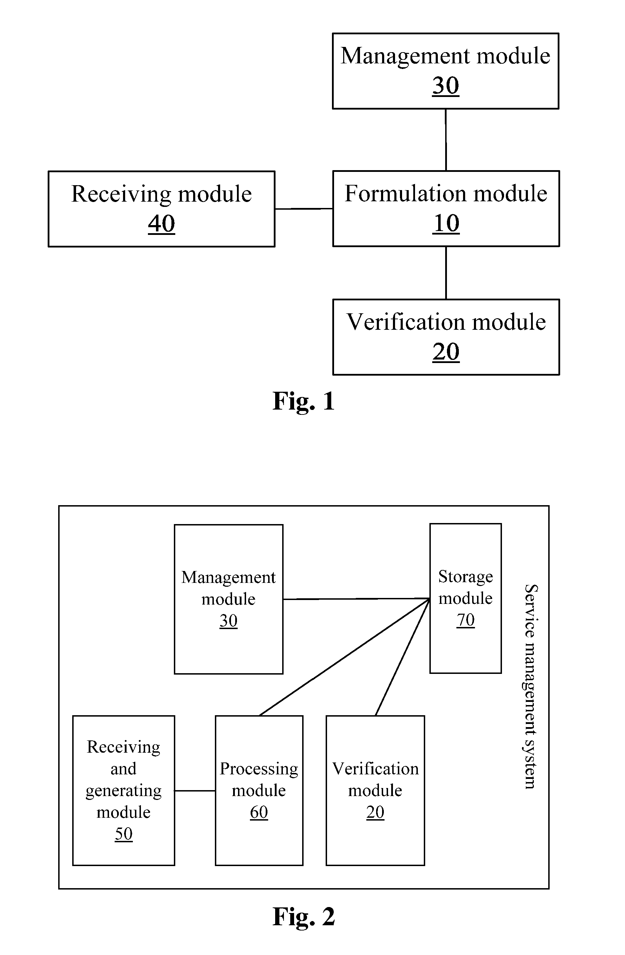

Fig. 1 is a structural diagram illustrating a service management system according to an embodiment of the present disclosure. The service management system comprises:
a formulation module 10, configured to formulate a service operation policy for a value-added service of an SP, wherein the service operation policy determines the service attributes of the value-added service by multiple preset decision attributes included in the service operation policy; and
a verification module 20, configured to verify whether the service attributes of the value-added service satisfy the service operation requirements by using the service operation policy formulated by the formulation module 10 when the SP sends the value-added service, and allowing sending the value-added service to the user in the situation that the requirements are satisfied.

The service management system in the embodiment regulates a value-added service operated by an SP by formulating a service operation policy for the service operated by the SP, thus solving the problem in the related art that supporting all value-added services without limitation causes strong impact and loss to the operating system of the operator, and negatively influences the operation efficiency of the service system. Using the embodiment, multiple decision attributes which can be dynamically set in the service operation policy can prohibit services which fail to satisfy the service operation policy from being sent to users, so that the value-added service operated by the SP is provided to the corresponding user under the corresponding service operation policy. Therefore, precise management for the services operated by SPs is realized to reduce strong impact and loss to the operating system caused by the service operation. The operation efficiency of the service system is improved. And the solution can avoid annoying the users outside the service operation policy.

Preferably, the service management system above further comprises: a management module 30, configured to set the decision attributes according to an instruction received from an operator, and establish a mapping relationship between the decision attributes and the service attributes; a receiving module 40, configured to receive from the SP a request for formulating a service operation policy for the value-added service; and the formulation module 10, further configured to formulate the service operation policy through the mapping relationship according to the requirement information in the request received by the receiving module 40; wherein the decision attributes may comprise at least one of: a user group attribute, a region attribute, a service domain attribute etc.

The preferred embodiment provides a specific implementation solution for formulating a service operation policy for a value-added service according to a request of an SP. Various decision attributes of the service operation are dynamically set by an operator, and the service operated by the SP is regulated by the service operation policy formulated by combinations of different decision attributes, thus realizing precise management for the services in multiple dimensions. In addition, according to its own needs, the SP may dynamically order from the formulation module a service operation policy of the value-added service to be operated.

Preferably, in the management system above, the management module 30 is further configured to set new decision attributes and/or formulate a new service operation policy according to the instruction received from the operator, or delete/modify the set decision attributes and/or the formulated service operation policy according to the instruction; and is further configured to modify the formulated service operation policy according to the instruction received from the SP.

This preferred embodiment enables the operator to add, delete or modify the decision attributes according to the requirements of specific services, and to establish a mapping relationship between the decision attributes and the service data (i.e. service attributes) via interacting with a value-added service management platform over again. In this case, the operator may also maintain the service operation policies of all SPs via the management module 30, including adding, deleting and modifying the service operation policies. In addition, the SP may also alter a service operation policy of a related service via the management module 30. The service operation policies of the SPs are dynamically formulated and modified to overcome the disadvantages of SP management.

To sum up, the management module 30 mainly has two functions: the first function is that via the management module 30, the operator may dynamically set the decision attributes, may add or delete the specific decision attributes according to the requirements of specific services, and may establish a mapping relationship between the decision attributes and the service data via interacting with the value-added service management platform and store the mapping relationship in a storage module; in this case, the operator may also maintain the service operation policies of all SPs, including adding, deleting and modifying the service operation policies; and the second function is that the SP may alter the related service operation policies via the management module 30.

Preferably, the verification module 20 is further configured to, when it is verified that the value-added service does not satisfy the requirements, send an error message to the SP and prohibit sending the value-added service to the user. If it is detected that the service cannot be provided to the user under the current service operation policy, it prohibits the SP from sending the service to the user, thus avoiding annoying the users outside the service operation policy. When the SP sends the service and the user uses the service, the verification module 20 verifies the service by using a related service operation policy to detect whether the service can be provided to the user under the current service operation policy. During the specific implementation, the verification module 20 may be merged with the value-added service management platform, or may interact with the value-added service management platform as an independent module.

Preferably, the service operation policy formulated for the value-added service of the SP by the formulation module 10 may be also a default service operation policy formulated according to the instruction received from the operator. In this way, even if the SP does not initiatively send a request for formulating a service operation policy, the formulation module 10 may formulate a default service operation policy for the service operated by the SP according to the instruction of the operator to verify the service using the default service operation policy.

As shown in Fig. 2, during the specific implementation process, the formulation module 10 and the receiving module 40 can be realized by a receiving and generating module 50 and a processing module 60. In addition, a storage module 70 may be set additionally to store the set decision attributes and the service operation policies, and the established mapping relationship between the decision attributes and the service attributes.

In the above, the receiving and generating module 50 is mainly configured to receive a request for formulating a service operation policy from the SP, wherein the service operation policy is mainly formed by different combinations of the decision attributes. The decision attributes are dynamically set by the operator and need to be supported by the value-added service management platform as well. For instance, for the user group attribute, the user name, the user age group, user's interests, hobbies etc. may be considered; for the region attribute, the province where the service is operated, the city and the number segment etc. may be considered; and for the service operation domain attribute or a content attribute, military, humanism etc. may be considered. An initial service operation policy is generated according to the request for formulating the service operation policy.

In the above, the processing module 60 is mainly configured to perform logic judgment on the initial service operation policy generated by the receiving and generating module 50, to consider the feasibility and scientific nature of the initial service operation policy from all aspects using the mapping relationship between the decision attributes and the service data (service attributes), and to finally generate a feasible service operation policy.

In the above, the storage module 70 is mainly configured to store such information as the related service operation policy, the related decision attributes, the related data supporting the decision attributes and the mapping relationship between the decision attributes and the service attributes. In this way, when the SP sends a service, the verification module 20 may interact with the storage module 70 directly to find a service operation policy corresponding to the service to verify the service.

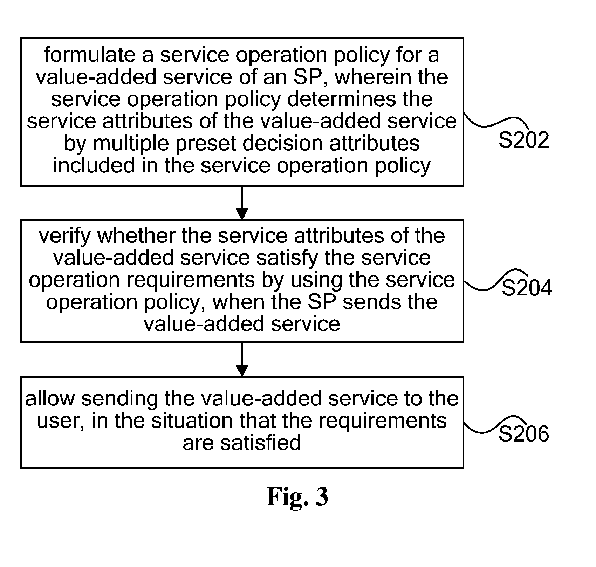

Fig. 3 is a flowchart illustrating a service management method according to an embodiment of the present disclosure, including the following steps:
Step S202: formulating a service operation policy for a value-added service of an SP, wherein the service operation policy determines the service attributes of the value-added service by multiple preset decision attributes included in the service operation policy;
Step S204: verifying whether the service attributes of the value-added service satisfy the service operation requirements by using the service operation policy, when the SP sends the value-added service; and
Step S206: allowing sending the value-added service to the user, in the situation that the requirements are satisfied.

The method in the embodiment regulates a value-added service operated by an SP by formulating a service operation policy for the service operated by the SP, thus solving the problem in the related art that supporting all value-added services without limitation causes strong impact and loss to the operating system of the operator, and negatively influences the operation efficiency of the service system. Using the embodiment, multiple decision attributes which can be dynamically set in the service operation policy can prohibit services which fail to satisfy the service operation policy from being sent to users, so that the value-added service operated by the SP is provided to the corresponding user under the corresponding service operation policy. Therefore, precise management for the services operated by SPs is realized to reduce strong impact and loss to the operating system caused by the service operation. The operation efficiency of the service system is improved. And the solution can avoid annoying the users outside the service operation policy.

Preferably, before Step S202, the method further comprises: receiving from an SP a request for formulating a service operation policy for a value-added service operated by the SP; and Step S202 can further comprises: formulating a service operation policy according to the requirement information in the request. In this way, a service operation policy may be formulated for a service operated by a SP according to a request of the SP. In addition, according to its own needs, the SP may dynamically order from the formulation module a service operation policy of the value-added service to be operated.

Preferably, before receiving from an SP a request for formulating a service operation policy, the method further comprises: setting the decision attributes according to a instruction received from an operator, and establishing a mapping relationship between the decision attributes and the service attributes; and the process of formulating a service operation policy according to the requirement information in the request comprises: according to the requirement information in the request, formulating a service operation policy using the mapping relationship. The decision attributes may comprise at least one of: a user group attribute, a region attribute and a service domain attribute.

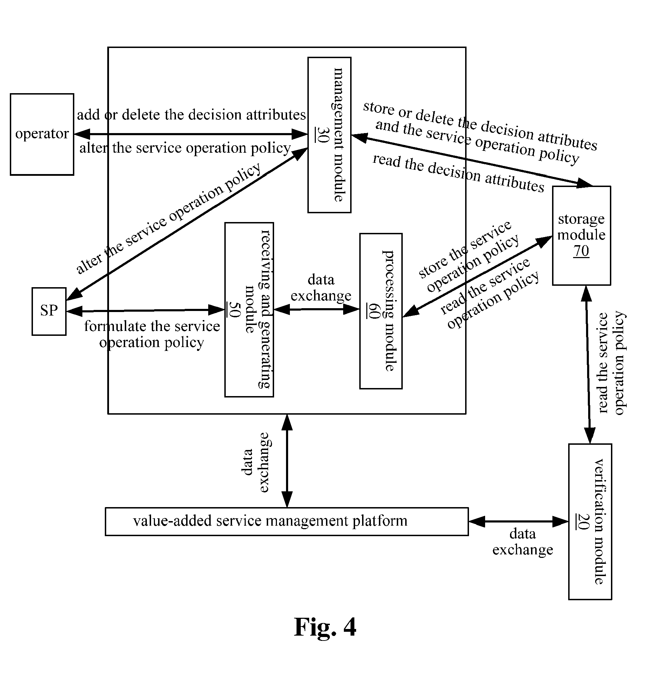

In conjunction with the service management system in Fig. 2, Fig. 4 shows a process of formulating a service operation policy by an SP, specifically including the following two steps.

Step 1: the operator sets the decision attributes.

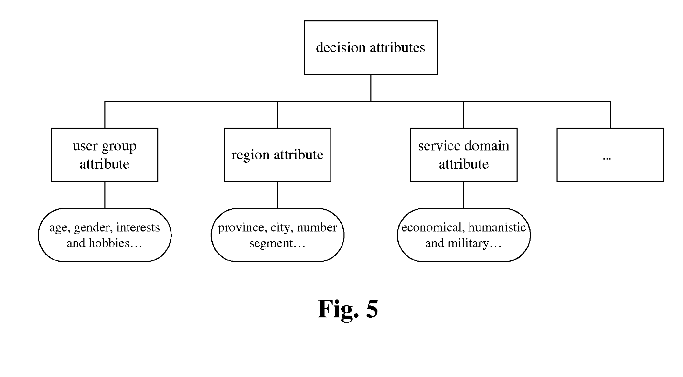

First, the operator sets the decision attributes for service operation via the management module 30, and these decision attributes may be added and deleted dynamically according to the operation requirements of different services. More specifically, Fig. 5 is a schematic diagram illustrating the decision attributes. In Fig. 5, the user group attribute may be set to include the gender, age, interests and hobbies of the user etc. so that the service is operated in a user group of specific gender, age, interests and hobbies etc.; the region attribute may include the province where the service is operated, the city, the number segment etc.; and the domain attribute refers to a specific domain in which the service is operated, e.g. the economic, humanistic and military domains etc. The decision attributes may be set or added dynamically according to the operation requirements of specific services and the management requirements of the operator. Of course, these decision attributes are not set randomly. There must be the service data (i.e. service attributes) required to support these decision attributes in a specific value-added service management platform. And, a mapping relationship between this attribute data and decision attributes is established by a management module. Also, the feasibility of setting these decision attributes needs to be considered.

Step 2: the SP formulates the service operation policy.

As shown in Fig. 4, the SP formulates the service operation policy for the service via the receiving and generating module 50. Comprehensively considering the requirements of the service itself and the restrictions of the operator on the decision attributes of specific services, the SP may configure the service operation policy flexibly. If the SP intends to operate a specific service for user group of females aged over 30 in the XX region, after receiving a request for formulating a service operation policy from the SP, the receiving and generating module 50 relates the specific requirements in the request for formulating a service operation policy with the attribute data (i.e. service attribute) of the value-added service management platform. That is, the description of the requirements is converted into specific fields required by the service (e.g. the description of the requirements is converted into the corresponding keywords in the database of the value-added service management platform), and an initial service operation policy is generated.

Subsequently, the receiving and generating module 50 transfers the initial service operation policy to the processing module 60 as shown in Fig. 4. The processing module 60 uses the mapping relationship between the decision attributes and the service attributes to perform logic (feasibility and scientific nature) judgment for the initial service operation policy. If the service policy is feasible, then a corresponding service operation policy is generated and stored in the storage module 70.

By the two steps above, the service of the SP is provided with a specific service operation policy. For example, in Step 1, the operator adds the decision attributes: the age and gender of the user, the social organization to which the user belongs, the region in which the service is operated, and the information of the number segment in which the service is operated. In Step 2, a service A which an SP intends to operate is as follows: the age of the user is older than N years, the social organization to which the user belongs is B society and the user should belong to the C region. Then, the service operation policy of the service A is generated automatically by the management system above, and the service is operated for a user group in which the users are aged over N, in the B society, and in the C region. Of cause, even if the SP does not formulate a specific service operation policy, the operator may also manage the SP service by using a default service operation policy of the management system. For example, the default service operation policy is set as operating the service only for the user group of local adults of the SP. As shown in Fig. 4, after the SP formulates the service operation policy, both the operator and the SP may dynamically modify the service operation policy, wherein the operator may further dynamically add decision attributes. In this way, when the SP sends a service, the service is restricted by the service operation policy, thus realizing the function of managing the service operation of the SP. Of course, the management system can serve as an independent system, and may be also embedded into the existing value-added service management platform.

Preferably, the service management method above further comprises: setting new decision attributes and/or formulating a new service operation policy according to the instruction received from the operator, or deleting/modifying the set decision attributes and/or the formulated service operation policy according to the instruction from the operator. The operator may add, delete or modify the decision attributes or the service operation policy according to the requirements. In this way, when an SP does not formulate a service operation policy for a value-added service operated by the SP, the operator may as well formulate a service operation policy initiatively for the service operated by the SP or verify the value-added service of the SP by using a default service operation policy, so as to verify the value-added service operated by all SPs.

Preferably, the service management method above further comprises: according to an instruction received from the SP, modifying the formulated service operation policy of the SP. The SP may also add a new service operation policy according to the change of the requirements, and delete or modify the formulated service operation policy, so that the SP can alter the formulated service operation policy dynamically.

Preferably, after Step S204, the service management method above further comprises: if the value-added service fails to satisfy the requirements, sending an error message to the SP and prohibit sending the value-added service to the user. If it is detected that the service cannot be provided to the user under the current service operation policy, the SP is prohibited from sending the service to the user, thus avoiding annoying the users outside the service operation policy.

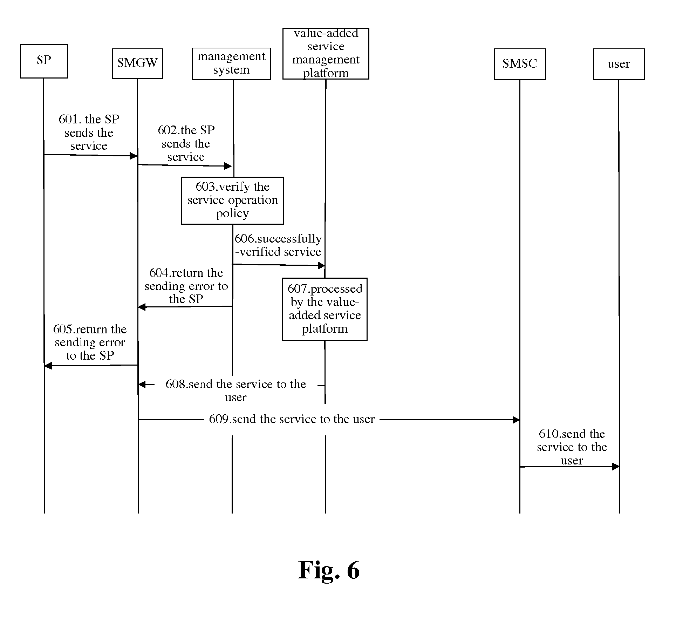

The process of the service management system above verifying a service is described below with reference to Fig. 6, wherein the service management system above serves as an independent system, and the process of the SP sending a short message service is taken as an example. The process comprises the following steps.

Step 601: an SP sends a short message service to the user. The short message service, which carries such information as a service name or a service code (collectively called a service identifier), user information, service contents etc., is first sent to a Short Message Gateway (SMGW).

Step 602: the SMGW forwards the short message service to the management system above.

Step 603: the short message service from the SMGW triggers the verification module in the management system. The verification module performs necessary data exchange with the value-added service management platform and the storage module via the service information in the sent short message service. The verification module parses a corresponding service operation policy, and determines whether the service information of the sent short message service accords with the service operation policy. And the verification module simultaneously determines whether the user can use the service under the service operation policy according to the number segment information, interests and hobbies, age information etc. of the user. If the verification of the verification module is passed, then Step 606 is performed. Otherwise, Step 604 is performed.

Step 604: the management system returns a sending error message to the SP and the sending error message is sent to the SMGW first.

Step 605: the SMGW forwards the sending error message to the SP and the process is ended.

Step 606: the successfully-verified short message service is sent to the value-added service management platform.

Step 607: the value-added service management platform further performs the corresponding processing, such as instruction parsing, fee deduction etc.

Step 608: after the processing, the value-added service management platform forwards the short message service sent by the SP to the SMGW.

Step 609: the SMGW forwards to a Short Message Service Center (SMSC) the short message service sent by the value-added service management platform.

Step 610: the SMSC sends the short message service to the user.

It can be seen from the description above that the present disclosure realizes the following technical effects: the operator can set the decision attributes and the SP can formulate a service operation policy to realize precise management for the SP services. In this case, the setting of the decision attributes and the SP service operation policy may change dynamically and may be configured flexibly so that the service operation of the SP can be managed more precisely; annoyance of the service operated by the SP to the users outside the service operation policy can be greatly reduced; and the operation efficiency of the service system can be improved to a certain extent.

Obviously, those skilled in the art should understand that the modules or steps above of the present disclosure may be implemented by general computing devices and centralized in a single computing device or distributed in a network consisting of multiple computing devices. Optionally, the modules or steps may be implemented by program codes executable by the computing devices, so that they may be stored in a storage device and executed by the computing device. In some cases, the steps as shown or as described may be executed according to a sequence different from the sequence herein. Or, the modules or steps may be respectively made into integrated circuit modules, or multiple modules or steps of these modules or steps may be made into a single integrated circuit module. In this way, the present disclosure is not limited to any specific combination of hardware and software.

The above are only preferred embodiments of the present disclosure and should not be used to limit the present disclosure. For those skilled in the art, the present disclosure may have various modifications and changes. Any modifications, equivalent replacements, improvements and the like within the spirit and principle of the present disclosure shall fall within the scope of protection of the present disclosure.

## Claims

1. A service management system, **characterized by** comprising:
a formulation module, configured to formulate a service operation policy for a value-added service of a Service Provider (SP), wherein the service operation policy determines the service attributes of the value-added service by multiple preset decision attributes included in the service operation policy; and
a verification module, configured to, when the SP sends the value-added service, verify whether the service attributes of the value-added service satisfy service operation requirements by using the service operation policy formulated by the formulation module, and to allow sending the value-added service to a user in the situation that the requirements are satisfied.

2. The service management system according to claim 1, **characterized by** further comprising:
a management module, configured to set the decision attributes according to an instruction received from an operator, and to establish a mapping relationship between the decision attributes and the service attributes;
a receiving module, configured to receive from the SP a request for formulating the service operation policy for the value-added service; and
the formulation module, further configured to use the mapping relationship to formulate the service operation policy according to requirement information in the request;
wherein the decision attributes comprise at least one of: a user group attribute, a region attribute and a service domain attribute.

3. The service management system according to claim 2, **characterized in that** the management module is further configured to set new decision attributes and/or formulate a new service operation policy according to the instruction received from the operator, or to delete/modify the set decision attributes and/or the formulated service operation policy according to the instruction; and further configured to modify the service operation policy according to the instruction received from the SP.

4. The service management system according to claim 1, **characterized in that** the verification module is further configured to, when it is verified that the value-added service does not satisfy the requirements, send an error message to the SP and prohibit sending the value-added service to the user.

5. The service management system according to claim 1, **characterized in that** the service operation policy is a default service operation policy formulated according to the instruction received from the operator.

6. A service management method, **characterized by** comprising:
formulating a service operation policy for a value-added service of an SP, wherein the service operation policy determines the service attributes of the value-added service by multiple preset decision attributes included in the service operation policy;
verifying whether the service attributes of the value-added service satisfy service operation requirements by using the service operation policy, when the SP sends the value-added service; and
allowing sending the value-added service to the user in the situation that the requirements are satisfied.

7. The service management method according to claim 6, **characterized in that** before formulating a service operation policy for a value-added service of an SP, the method further comprises: receiving from an SP a request for formulating a service operation policy for a value-added service; and
formulating the service operation policy for the value-added service of the SP comprises: formulating the service operation policy according to the requirement information in the request.

8. The service management method according to claim 7, **characterized in that**
before receiving the request, the method further comprises: setting the decision attributes according to an instruction received from an operator, and establishing a mapping relationship between the decision attributes and the service attributes; and
formulating a service operation policy according to the requirement information in the request comprises: using the mapping relationship to formulate the service operation policy according to the requirement information, wherein the decision attributes comprise at least one of: a user group attribute, a region attribute and a service domain attribute.

9. The service management method according to claim 6, **characterized by** further comprising:
setting new decision attributes and/or formulating a new service operation policy according to the instruction received from the operator, or deleting/modifying the set decision attributes and/or the formulated service operation policy according to the instruction.

10. The service management method according to claim 6, **characterized by** further comprising:
modifying the service operation policy according to the instruction received from the SP.

11. The service management method according to claim 6, **characterized in that** after verifying whether the service attributes of the value-added service satisfy the service operation requirements by using the service operation policy, the method further comprises:
in the situation that the value-added service does not satisfy the requirements, sending an error message to the SP and prohibit sending the value-added service to the user.
